# FASCICULE DE BREVET EUROPEEN

(11) **EP 3 193 578 B1**
(45) Date de publication et mention de la délivrance du brevet: **06.11.2019**
(21) Numéro de dépôt: 15760229.3
(22) Date de dépôt: 25.08.2015
(51) Int. Cl.: A01D 34/82, A01D 34/81

(54) **TONDEUSE À ROUES POUR CONDUCTEUR MARCHANT**
RASENMÄHER MIT RÄDERN FÜR GEHENDEN LENKER
WHEELED LAWNMOWER FOR WALKING DRIVER

(30) Priorité: 15.09.2014 FR 1458650
(43) Date de publication de la demande: 26.07.2017
(73) Titulaire: PELLENC, 84120 Pertuis (FR)
(72) Inventeur: PELLENC, Roger, 84120 Pertuis (FR)
(74) Mandataire: Weber, Etienne Nicolas
(86) Numéro de dépôt international: PCT/FR2015/052262
(87) Numéro de publication internationale: WO 2016/042230

(56) Documents cités:
- EP-A2- 2 589 284
- FR-A1- 2 589 668
- US-A- 4 041 679
- US-A- 5 261 215
- US-A- 5 636 504

## Description

### Domaine technique

La présente invention concerne une tondeuse agraire à roues pour conducteur marchant, telle qu'une tondeuse à gazon ou une tondeuse-débroussailleuse. On entend par tondeuse à roues pour conducteur marchant, une tondeuse poussée ou autotractée qui n'est ni destinée à être portée par l'utilisateur, ni destinée à porter l'utilisateur. L'utilisateur de la tondeuse marche derrière la tondeuse lors de la tonte ou du débroussaillage. L'invention trouve des applications notamment dans les domaines de la tonte professionnelle pour l'entretien d'espaces verts ou pour le débroussaillage. Elle trouve également des applications auprès d'utilisateurs particuliers pour l'entretien de pelouses.

### Etat de la technique antérieure.

Les tondeuses pour conducteur marchant présentent en général une unité de coupe, maintenue à une distance prédéterminée de la surface du sol par des roues ou des roulettes. Les roues sont généralement fixées à un carter de coupe et sont réglables en hauteur de manière à fixer une distance entre le carter de coupe et le sol. Cette distance détermine également la hauteur de coupe des herbes ou des végétaux ligneux.

Les tondeuses sont également pourvues d'un guidon, que l'utilisateur saisit pour pousser et/ou pour guider la tondeuse.

Le guidon est généralement pourvu de commandes. Il s'agit par exemple d'une commande d'ouverture de l'admission du moteur, dans le cas d'un moteur thermique, d'une commande de la vitesse d'avancement de la tondeuse, d'une commande d'arrêt des lames de coupe, d'une commande d'un frein de lame ou d'une commande de crabotage.

Les tondeuses pour conducteur marchant présentent un certain nombre d'avantages, et en particulier une grande flexibilité dans leur utilisation. Elles présentent en particulier l'avantage d'une relative compacité, favorable à l'entretien d'espaces verts urbains ou de petite surface.

En revanche, le guidon constitue la principale limite à la compacité. Il existe certes des modèles à guidon pliable mais l'encombrement du guidon demeure un obstacle pour le rangement des tondeuses ou pour leur transport sur le lieu de travail. En position pliée, il dépasse généralement l'encombrement au sol du châssis de la tondeuse. Lorsque la tondeuse est transportée dans un coffre de véhicule ou dans un camion, elle se déplace dans ce dernier lorsque celui-ci est en mouvement, ce qui conduit à des chocs répétés sur la partie du guidon dépassant l'encombrement au sol de la tondeuse.

Une autre difficulté rencontrée avec les tondeuses pour conducteur marchant est liée à l'accessibilité des organes de coupe, en particulier le carter et les lames de coupe, pour des opérations de maintenance ou de nettoyage.

L'utilisation des tondeuses pour la coupe de végétaux et en particulier de végétaux herbacés humides peut entraîner un colmatage des organes de coupe. Or, un tel colmatage occasionne des opérations de nettoyage. De plus la rencontre d'obstacles avec les lames, tels que des cailloux, lors de la tonte, émousse la partie affutée de la lame. Ainsi, et en particulier pour des tondeuses agraires professionnelles, soumises à un usage intensif, des opérations régulières de maintenance et d'affutage des organes de coupe sont indispensables.

Une illustration de l'état de la technique est donnée par les documents EP 2 589 284, FR 2 589 668 et US 4041679. Le document EP 2 589 284 montre en particulier une tondeuse avec un guidon repliable pouvant être remisée en position dite verticale.

### Exposé de l'invention

La présente invention a pour but de proposer une tondeuse à roues pour conducteur marchant, de construction simple et robuste, susceptible d'être rendue particulièrement compacte en vue du rangement et du transport.

L'invention a également pour but de proposer une telle tondeuse particulièrement insensible aux chocs lors du nettoyage, du transport ou de la maintenance.
L'invention a encore pour but de proposer une telle tondeuse permettant un accès facilité et sûr aux organes de coupe.

Pour atteindre ces buts l'invention propose une tondeuse comprenant : un châssis, avec une partie arrière pourvue de roues à axe de rotation fixe et une partie avant pourvue d'au moins une roue pivotante, une unité de coupe solidaire du châssis, et un guidon.
Conformément à l'invention, le guidon est monté sur au moins une extension rigide de la partie arrière du châssis avec une articulation selon un axe parallèle à l'axe de rotation des roues arrières, entre au moins une position de travail, haute, et une position de maintenance, basse, dans laquelle le guidon est rabattu en direction de la partie avant du châssis, et la partie avant du châssis est pourvue d'au moins un verrou pour verrouiller le guidon dans la position de maintenance.

La position du guidon, dite de maintenance, est effectivement favorable au nettoyage et à l'entretien de la tondeuse. Cette même position peut également être retenue pour soulever, déplacer manuellement, remiser et transporter la tondeuse. En particulier, la position de maintenance peut être retenue pour le transport de la tondeuse dans un véhicule utilitaire. Dans ce cas, le châssis, et le guidon dans la position de maintenance constituent des protections efficaces contre les chocs.

Le verrou peut être un verrou de tout type apte à retenir le guidon. Il peut s'agir d'un verrou à broche manuelle ou à enclenchement automatique. Il peut comporter en particulier des crochets de maintien, chargés par un ressort, et venant en prise avec une partie adaptée du guidon. De préférence, et par sécurité, la libération du verrou est manuelle.

Le guidon, le châssis et son extension arrière sont de préférence des structures tubulaires en acier ou en aluminium. Ils peuvent notamment être réalisés en tube de section oblongue pour favoriser la rigidité du châssis et le maintien des différents organes de la tondeuse fixés sur le châssis. Par ailleurs, l'assemblage des tubes formant le châssis est de préférence un assemblage sans soudure. Il en va de même pour les différents éléments qui sont rapportés au châssis, tels que l'unité de coupe et l'extension arrière. Les différentes parties du châssis et les éléments rapportés peuvent être maintenus notamment par emboîtement, par manchons ou par brides vissées. Cela permet notamment une maintenance et un remplacement aisé de chaque pièce individuelle de la tondeuse.

Le châssis s'étend essentiellement selon un plan parallèle à la surface du sol lorsque les roues avant et arrière sont en contact du sol. L'extension rigide, montée de préférence sur des longerons latéraux du châssis s'étend hors du plan du châssis, vers le haut, c'est-à-dire à l'opposé des roues. Elle sert à la fixation du guidon et à la stabilité de la tondeuse, lorsqu'elle y prend appui en position de maintenance, par exemple pour le stockage. L'extension rigide arrière présente de préférence une hauteur comprise entre le tiers et les deux tiers de la longueur du châssis et encore de préférence une longueur comprise entre le tiers et la moitié de la longueur du châssis.

L'extension rigide se présente par exemple sous la forme d'un arceau qui est fixé sur les longerons latéraux du châssis.

Selon un aspect particulier de l'invention, l'axe d'articulation du guidon peut être situé dans un plan sensiblement perpendiculaire au châssis, et passant entre l'axe de rotation des roues arrières et une extrémité arrière de la tondeuse.

Cette particularité présente l'avantage que le guidon peut être replié au-dessus de la tondeuse, dans l'alignement du châssis de manière à minimiser son encombrement.

La tondeuse peut comporter au moins une charnière selon l'axe d'articulation du guidon, reliant le guidon à l'extension arrière, la charnière étant pourvue d'un verrou pour verrouiller le guidon dans la position de travail haute. De préférence deux charnières sont prévues respectivement sur deux bras du guidon pour l'articuler de part et d'autre d'une extension arrière en forme d'arceau.

Dans la position de travail, le guidon s'étend de manière oblique vers le haut et vers l'arrière du châssis de la tondeuse. Plusieurs positions de travail, dites « hautes » par opposition à la position de maintenance, peuvent être prévues pour s'adapter à la taille de l'utilisateur. Les charnières peuvent être pourvues à cet effet d'encoches indexées pour différentes positions hautes ou peuvent être munies d'un dispositif de serrage, pour verrouiller le guidon dans une position haute sélectionnée par l'utilisateur.

Selon une réalisation particulière de la tondeuse, celle-ci peut comporter un ou plusieurs organes d'appui solidaires du guidon ou de l'extension arrière, l'organe d'appui étant apte à venir en contact du sol lorsque la tondeuse est pivotée vers l'arrière, autour de ses roues arrière.

Ainsi, la tondeuse peut occuper au moins deux positions par rapport à la surface du sol. Une première position correspond à celle de la tonte, dans laquelle la tondeuse est en appui sur ses roues arrière et avant et dans laquelle le châssis s'étend de manière sensiblement parallèle au sol. En d'autres termes il s'agit d'une position où le châssis de la tondeuse est sensiblement horizontal pour peu que la tondeuse soit posée sur un sol ou un support horizontal.

Une deuxième position stable de la tondeuse peut être occupée lorsque le guidon est dans la position de maintenance, c'est à dire rabattu vers l'avant du châssis. Les appuis se font alors sur les roues arrière et l'organe d'appui. La tondeuse peut être mise dans cette position en la faisant pivoter vers l'arrière autour de ses roues arrières. Elle peut à cet effet être saisie par le guidon dans la position de maintenance. En effet, dans sa position rabattue, le guidon est verrouillé sur la partie avant du châssis et constitue ainsi avec le châssis une structure particulièrement rigide et permettant de manipuler aisément la tondeuse. Pour mettre la tondeuse dans cette position, il convient d'en retirer, le cas échéant, un bac de ramassage des végétaux tondus, si la tondeuse en est équipée.

Le châssis de la tondeuse se trouve alors dans une position sensiblement perpendiculaire au sol ou légèrement inclinée, de manière que l'emplacement du centre de gravité de la tondeuse contribue à la stabilité de la position. L'organe d'appui peut être constitué par exemple par les extrémités de bras du guidon. Il peut aussi être formé par une barre horizontale d'un arceau formant l'extension arrière rigide.

Dans la position en appui sur l'organe d'appui, l'accès à l'unité de coupe et en particulier aux lames et au carter de l'unité de coupe est grandement facilité. Cette position est donc utile pour des opérations de nettoyage ou de maintenance.
Selon un mode de réalisation préféré de la tondeuse de l'invention, l'extension arrière rigide et l'extrémité du guidon dans la position de maintenance, peuvent présenter une hauteur moyenne supérieure à une hauteur de l'unité de coupe, mesurée par rapport au châssis, de sorte que le guidon soit maintenu au-dessus d'une partie sommitale de l'unité de coupe dans la position de maintenance.

Le terme hauteur s'entend par rapport au châssis lorsque la tondeuse est posée sur le sol en appui sur ses roues.

Ainsi, dans la position de maintenance, le guidon, et en particulier des bras du guidon, constituent une armature de protection de la partie sommitale de l'unité de coupe c'est-à-dire la partie opposée à celle de la lame de coupe.

Il est encore envisageable de faire occuper à la tondeuse une troisième position dans laquelle elle est renversée et entièrement en appui sur le guidon dans sa position de maintenance. Le carter et la lame de coupe, de même que les roues sont alors tournés vers le haut et particulièrement accessibles pour une opération de maintenance. L'unité de coupe reste dans ce cas isolée du sol et n'y vient pas en appui, pour autant qu'il soit plan, compte tenu de la position du guidon au-delà de celle-ci en position de maintenance.

Selon une réalisation particulièrement simple et stable du guidon, celui-ci peut présenter deux bras articulés sur l'extension arrière rigide et reliés entre eux par une section d'entretoise. La section d'entretoise peut être pourvue de poignées pour sa manipulation par un utilisateur. Il convient de noter que le guidon peut être conformé différemment et ne comporter par exemple qu'un unique montant central articulé sur l'extension arrière du châssis. L'extrémité libre du guidon, ou la section d'entretoise formant l'extrémité libre, peuvent être configurées pour coopérer avec le verrou situé à l'avant du châssis, lorsque le guidon est replié dans la position de maintenance.

L'unité de coupe motorisée de la tondeuse peut comprendre un moteur, un carter de coupe et une ou plusieurs lame de coupe, logées dans le carter et susceptibles d'être entrainées en rotation par le moteur. Le carter est de préférence monté sur le châssis avec une possibilité de réglage en hauteur, afin d'ajuster la hauteur de tonte. En particulier le carter de coupe, contenant les lames, peut être suspendu au châssis par une fixation à parallélogramme pour le réglage de la hauteur. Le moteur peut être à position fixe sur le châssis, ou, de préférence, solidaire du carter de coupe.

La tondeuse peut être du type poussée ou autotractée. Lorsqu'elle est autotractée elle peut comprendre en outre un ensemble motoréducteur couplant le moteur de l'unité de coupe aux roues arrière.
A titre d'alternative, et en particulier dans le cas d'une tondeuse électrique, chaque roue arrière peut aussi être pourvue d'un moteur d'entrainement électrique propre et d'un ensemble motoréducteur.

Le moteur de l'unité de coupe peut également être un moteur électrique. Son alimentation peut être assurée par l'intermédiaire d'un câble électrique branché au secteur. Cependant, et de préférence, la tondeuse peut comporter au moins une batterie d'accumulateurs pour son alimentation en énergie. La batterie, peut être solidaire du carter de coupe, ou, de préférence, peut être fixée directement sur le châssis.

En particulier la batterie peut servir à alimenter le moteur de l'unité de coupe et éventuellement un ou plusieurs moteurs utilisés pour l'avancement de la tondeuse, le cas échéant.

D'autres caractéristiques et avantages de l'invention ressortent de la description des figures qui suit. Cette description est donnée à titre d'illustration et non de limitation.

### Brève description des figures

La figure 1 est une vue en perspective d'une tondeuse conforme à l'invention, avec un guidon en position de travail, et d'un utilisateur de cette tondeuse.
La figure 2 est une vue en perspective et en éclaté montrant des éléments de la tondeuse de la figure 1, les constituants de l'unité de coupe n'étant pas représentés.
La figure 3 est une vue en perspective de la tondeuse de la figure 1 avec le guidon en position de maintenance.
La figure 4 est une vue de côté de la tondeuse de la figure 3, en appui sur ses roues.
La figure 5 est une vue de côté de la tondeuse de la figure 3 dans une position pivotée.
La figure 6 est une vue partielle d'un détail à plus grande échelle, de la tondeuse des figures 1, 3, 4 et 5, illustrant le verrouillage du guidon dans une position de maintenance.

Description détaillée de modes de mise en œuvre de l'invention.

Dans la description qui suit, en référence aux figures des dessins, des parties identiques ou similaires sont repérées avec les mêmes signes de référence de sorte que l'on puisse se reporter d'une figure à l'autre.

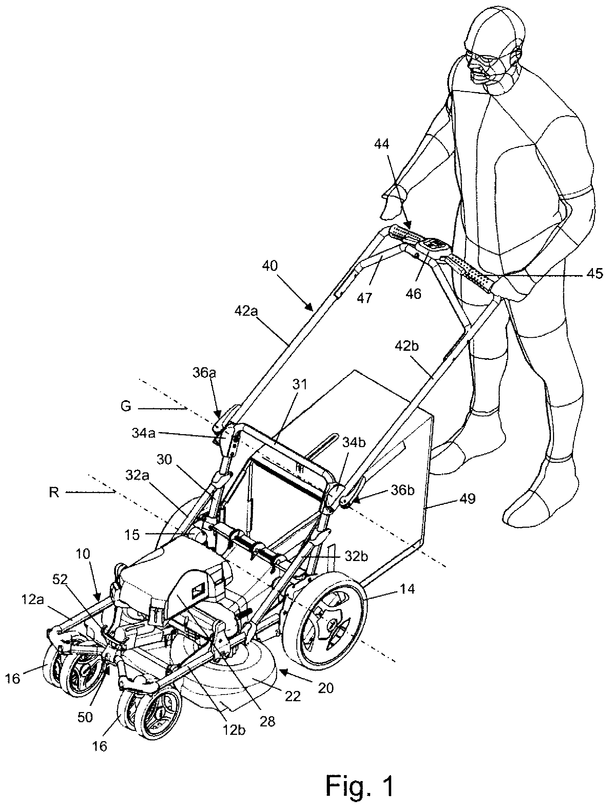

La figure 1 montre une tondeuse conforme à l'invention.

Elle comprend un châssis 10 en tube de section oblongue. On entend par tube de section oblongue un tube dont la section s'apparente à un ovale ou une ellipse ou à une section inscrite dans un parallélépipède avec un ou plusieurs côtés de cette section ayant une forme arrondie. Le châssis 10 comprend deux longerons latéraux tubulaires 12a, 12 b et s'étend sensiblement selon un plan.

Une partie arrière du châssis, porte deux roues arrières 14 qui, dans l'exemple illustré, sont des roues motrices pourvues chacune d'un moteur d'entrainement 15 monté sur un réducteur. Deux roues folles 16 sont montées à l'avant du châssis avec une possibilité de pivoter à 360° autour d'un axe sensiblement vertical dans une position d'utilisation de la tondeuse. L'axe de pivotement des roues avant est sensiblement perpendiculaire à leur axe de rotation. Les roues avant 16 sont ici des roues doubles. Les termes avant et arrière s'entendent par rapport au sens d'avancement normal de la tondeuse et par rapport à la position du conducteur de la tondeuse, qui se tient à l'arrière de la tondeuse lors de la tonte.

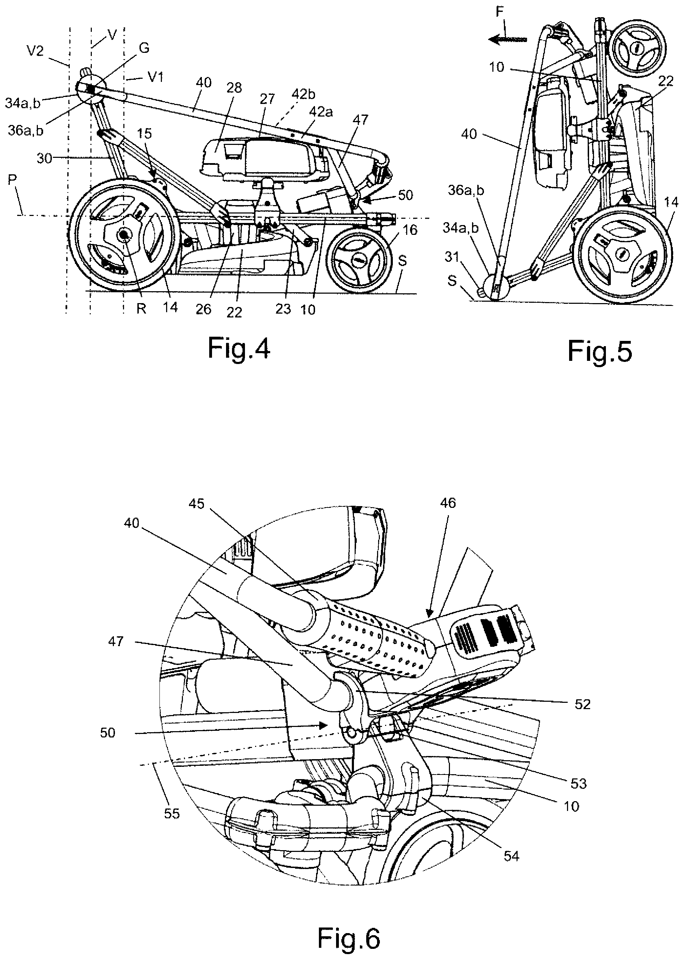

Sur le châssis 10 est fixée une unité de coupe 20 pourvue d'un carter de coupe 22 logeant des lames de coupe non représentées sur les figures car situées sous le carter de coupe, et d'un moteur électrique 26. Le moteur 26 est monté directement sur le carter de coupe. L'unité de coupe 20 comporte également une batterie 28 pour l'alimentation électrique du moteur montée directement sur le châssis. La batterie peut aussi, selon une variante, être solidaire du carter de coupe. Dans l'exemple illustré, le carter de coupe 22 est monté sur le châssis avec une possibilité de réglage en hauteur. En particulier le carter de coupe est suspendu au châssis par des biellettes d'une suspension à parallélogramme. Une partie de cette suspension à parallélogramme est indiquée avec la référence 23 sur la figure 4 décrite ultérieurement.

A titre d'alternative, il peut aussi être prévu de régler la hauteur de coupe de la tondeuse en agissant sur la hauteur des roues, le carter de coupe étant alors monté fixe sur le châssis.

A l'arrière du châssis 10 on peut observer une extension fixe et rigide 30 faisant saillie vers le haut, c'est-à-dire à l'opposé de la surface d'appui des roues lorsque la tondeuse est en position de tonte. Dans l'exemple illustré l'extension arrière comprend un arceau 31 tubulaire formant un pont entre les longerons 12a et 12b du châssis. L'arceau est fixé de chaque côté, respectivement sur les longerons 12a et 12b du châssis et est maintenu par des jambages 32a, 32b qui prennent également appui sur les longerons 12a, 12b. Les jambages, de préférence tubulaires, maintiennent fermement la position de l'arceau 31. La partie libre de l'extension, c'est à dire la partie haute de l'arceau est pourvue de chaque côté latéral d'une charnière 34a, 34b sur laquelle vient s'articuler un guidon 40. Le guidon comprend des bras 42a, 42b fixés respectivement aux charnières 34a, 34b. Les charnières 34a, 34b permettent de faire pivoter le guidon 40 selon un axe d'articulation G parallèle à l'axe de rotation R des roues et perpendiculaire aux longerons latéraux 12a, 12b du châssis 10, de sorte que le guidon puisse être rabattu au-dessus de la tondeuse et vers l'avant.

Le guidon présente une section d'entretoise 44 sensiblement perpendiculaire aux bras 42a, 42b et parallèle à la partie sommitale de l'arceau 31.

La section d'entretoise 44 est pourvue de poignées de maintien 45 et d'une unité de commande de la tondeuse 46. Une deuxième entretoise de renforcement 47 est prévue dans l'exemple illustré. L'unité de commande est reliée électriquement au moteur de manière à contrôler, par exemple, la vitesse d'avancement de la tondeuse.

La hauteur de la position de travail du guidon peut être ajustée en faisant varier l'angle entre les bras du guidon et l'extension arrière fixe, c'est-à-dire l'ouverture des charnières 34a, 34b. Pour maintenir la position de travail souhaitée et adaptée à un utilisateur, les charnières sont équipées de cames de serrage 36a, 36b pour bloquer la position haute du guidon.

Dans l'exemple de réalisation de la tondeuse illustré par la figure 1, on peut observer un bac de ramassage 49 pour la récupération des végétaux tondus. Il s'agit d'un bac de ramassage amovible qui peut notamment être retiré lorsque la tondeuse est mise dans une position pivotée vers l'arrière telle qu'illustrée par la figure 5, décrite ultérieurement. Le bac de ramassage amovible n'est pas représenté sur les figures suivantes.
Il convient de préciser qu'une tondeuse conforme à l'invention peut être pourvue ou non d'un bac de ramassage amovible pour la récupération de tonte. En particulier, elle peut aussi être configurée pour le mulching, sans bac.

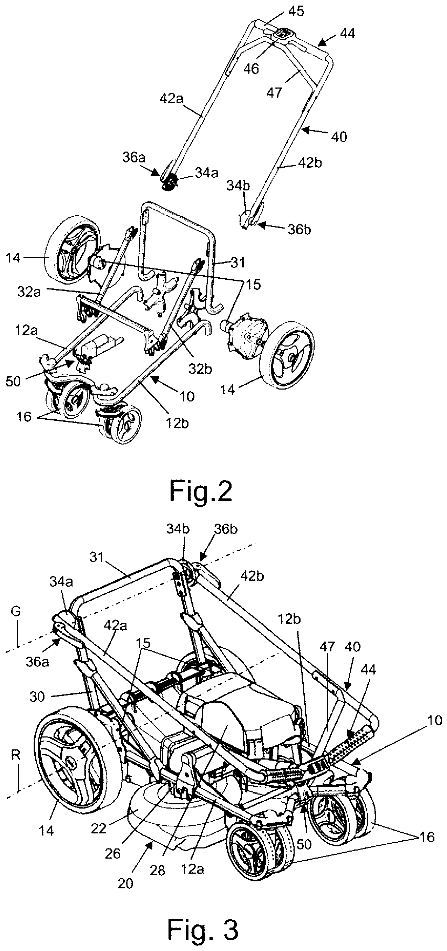

La figure 2 montre des éléments de la tondeuse de la figure 1. Elle montre en particulier des éléments tubulaires formant le châssis, l'extension arrière et un certain nombre d'éléments rapportés sur le châssis, comme le guidon, les roues ou une fixation de l'unité de coupe. L'unité de coupe en soi n'est pas représentée. L'assemblage des éléments du châssis et la fixation des éléments reportés est réalisée au moyen de manchons, et de brides vissées. Il s'agit d'un assemblage sans soudure.

La figure 3 montre la tondeuse de la figure 1 avec le guidon 40 en position de maintenance. Les cames de serrage 36a, 36b sont libérées et le guidon 40 est pivoté vers l'avant au-dessus de la tondeuse autour de l'axe d'articulation G. On peut observer que la longueur du guidon, c'est-à-dire pour l'essentiel la longueur de ses bras 42a, 42b dans l'exemple de réalisation illustré, est sensiblement égale à la longueur du châssis. Ainsi, dans la position repliée de maintenance la section l'entretoise 44 qui constitue l'extrémité libre du guidon vient rejoindre l'avant du châssis ou se trouve un verrou 50 du guidon. De préférence, la longueur du guidon est telle que la section d'entretoise 44 reste en retrait de l'extrémité avant du châssis de façon à être protégée de chocs lors de mouvements intempestifs de la tondeuse, par exemple lorsque celle-ci est placée sur la plate-forme d'un camion lors de son transport.

Dans l'exemple illustré, et comme le montre mieux la figure 6, le verrou 50 comprend des crochets 52 pivotant autour d'un axe 55 et chargés par un ressort de torsion 53 qui viennent en prise sur une partie du guidon 40. Plus précisément, et comme le montre encore la figure 6, les crochets viennent en prise sur l'entretoise de renforcement 47. Le verrou 50 est fixé par une bride 54 vissée sur le châssis 10. Lorsque les crochets 52 sont en prise sur l'entretoise de renforcement 47, s'opère un verrouillage mécanique assurant une liaison entre le guidon et le châssis. Il est alors possible de manipuler la tondeuse directement par le guidon sans qu'il soit nécessaire de verrouiller les cames de serrage 36a et 36b. Dans l'exemple illustré, le déverrouillage du guidon nécessite une action manuelle sur les crochets 52 dirigée vers l'avant de la tondeuse, pour le libérer. Le guidon peut alors être pivoté vers sa position de travail.

La figure 4 est une vue de côté de la tondeuse de la figure 3 reposant sur un sol horizontal S avec les roues avant et arrière 14, 16.

On peut observer que l'axe d'articulation G des charnières 36a, 36b du guidon 40 autour de l'extrémité supérieure de l'extension arrière fixe 30 du châssis 10 est située au-dessus du plan P selon lequel s'étendent le châssis et en particulier les longerons. De manière plus précise l'axe d'articulation G est situé dans un plan vertical V, dit de référence, perpendiculaire au plan P du châssis, et positionné de préférence entre un premier plan V1 parallèle au plan de référence V et comprenant l'axe de rotation R des roues arrières et un deuxième plan V2 parallèle au plan de référence V, passant par l'extrémité arrière hors tout de la tondeuse. Dans l'exemple illustré, l'extrémité arrière hors tout de la tondeuse est formée par la bande de roulement des roues arrières 14.

On peut observer que la hauteur de l'extension 30 arrière considérée comme la hauteur de l'axe de d'articulation G autour duquel s'articule le guidon, par rapport au plan P du châssis, et la hauteur du verrou 50 qui reçoit l'extrémité du guidon sont telles que leur moyenne soit supérieure à la hauteur de la partie sommitale 27 de l'unité de coupe de telle sorte que le guidon soit maintenu au-dessus d'une partie sommitale de l'unité de coupe dans la position de maintenance. Dans l'exemple illustré la partie sommitale 27 correspond à la batterie 28 d'alimentation électrique.

Ainsi le guidon 40, et en particulier ses bras 42a et 42b protègent en position de maintenance la partie sommitale 27 de l'unité de coupe, et en particulier la batterie 28.

La figure 5 montre la tondeuse de la figure 3 pivotée vers l'arrière, en direction d'une flèche F, autour des roues arrière 14. Dans cette position, la tondeuse est en appui sur les roues arrières 14 et un organe d'appui qui est formé dans l'exemple de la figure par une extension des charnières. Selon d'autres possibilités de réalisation l'organe d'appui peut aussi être formé par l'extrémité des bras du guidon ou par le sommet de l'arceau 31 formant l'extension rigide arrière 30. Eventuellement un patin d'appui spécifique peut être prévu.

Le guidon verrouillé dans la position de maintenance forme avec le châssis une structure particulièrement rigide qui assure la stabilité de la tondeuse et la protection de ses organes. Par ailleurs, la position de la tondeuse illustrée par la figure 45 facilite l'accès au carter de coupe 22 et aux lames de coupe qui y sont logées.
Il convient de noter que dans cette position le blocage des charnières au moyen des cames de serrage 36a, 36b n'est pas indispensable, le guidon étant maintenu par le verrou 50.

## Revendications

1. Tondeuse à roues comprenant :
- un châssis (10), avec une partie arrière pourvue de roues arrières (14) à axe de rotation fixe (R) et une partie avant pourvue d'au moins une roue pivotante (16),
- une unité de coupe (22, 24, 26, 28) motorisée solidaire du châssis, et
- un guidon (40), le guidon étant monté sur au moins une extension arrière rigide (30) de la partie arrière du châssis avec une articulation selon un axe d'articulation (G) parallèle à l'axe de rotation (R) des roues arrières, entre au moins une position, dite de travail, et une position, dite de maintenance, dans laquelle le guidon est rabattu en direction de la partie avant du châssis, **caractérisée en ce que** la partie avant du châssis comprend un verrou (50), pour verrouiller le guidon dans ladite position de maintenance.

2. Tondeuse selon la revendication 1, dans lequel le châssis (10) est un châssis à éléments tubulaires.

3. Tondeuse selon l'une des revendications précédentes, dans lequel le châssis (10) comporte des éléments de châssis tubulaires à section oblongue.

4. Tondeuse selon l'une des revendications 2 ou 3, dans lequel les éléments de châssis tubulaires sont assemblés sans soudure, et comprenant des éléments rapportés au châssis, fixés au châssis sans soudure.

5. Tondeuse selon l'une des revendications précédentes, dans lequel l'axe d'articulation (G) est situé dans un plan de référence (V) sensiblement perpendiculaire à un plan (P) du châssis, le plan de référence (V) étant situé entre un premier plan (V1) parallèle au plan de référence (V) et comprenant l'axe de rotation (R) des roues arrières (14), et un deuxième plan (V2) parallèle au plan de référence (V) et passant par une extrémité arrière hors tout de la tondeuse.

6. Tondeuse selon l'une des revendications précédentes, comprenant au moins une charnière (34a, 34b) selon l'axe de pivotement du guidon, reliant le guidon (40) à l'extension arrière (30) du châssis, la charnière étant pourvue d'un verrou (36a, 36b) pour verrouiller le guidon dans la position de travail haute.

7. Tondeuse selon l'une des revendications précédentes, comprenant au moins un organe d'appui (34a, 34b, 42a, 42b) solidaire du guidon ou de l'extension arrière, l'organe d'appui étant apte à venir en contact du sol lorsque la tondeuse est pivotée vers l'arrière, autour de ses roues arrières, ou renversée.

8. Tondeuse selon l'une des revendications précédentes dans lequel l'extension arrière rigide (30) et l'extrémité (44) du guidon dans la position de maintenance, présentent une hauteur moyenne supérieure à une hauteur de l'unité de coupe, mesurée par rapport au châssis, de sorte que le guidon soit maintenu au-dessus d'une partie sommitale (27) de l'unité de coupe dans la position de maintenance.

9. Tondeuse selon l'une des revendications précédentes dans lequel le guidon (40) présente deux bras (42a, 42b), articulés sur l'extension arrière rigide (30), et reliés entre eux par une section d'entretoise (44,47).

10. Tondeuse selon l'une quelconque des revendications précédentes dans lequel l'unité de coupe motorisée comprend un moteur (26), un carter de coupe (22), réglable en hauteur, et au moins une lame de coupe (24) entrainée en rotation par le moteur.

11. Tondeuse selon la revendication 9, dans laquelle le moteur (26) est un moteur électrique, la tondeuse comprenant en outre au moins une batterie d'accumulateurs (28) pour l'alimentation électrique du moteur.

12. Tondeuse autotractée selon l'une quelconque des revendications précédentes, dans laquelle chaque roue arrière (14) est pourvue d'un moteur d'entrainement électrique (15).

## Patentansprüche

1. Rasenmäher mit Rädern, umfassend:
- ein Fahrgestell (10) mit einem hinteren Abschnitt, der mit Hinterrädern (14) mit einer festen Drehachse (R) versehen ist, und einem vorderen Abschnitt, der mit mindestens einem Schwenkrad (16) versehen ist,
- eine motorisierte Schneideinheit (22, 24, 26, 28), die in das Fahrgestell integriert ist, und
- einen Lenker (40), wobei der Lenker an mindestens einer steifen hinteren Verlängerung (30) des hinteren Abschnitts des Fahrgestells mit einer Gelenkverbindung entlang einer Gelenkachse (G), die parallel zu der Drehachse (R) der Hinterräder ist, zwischen mindestens einer sogenannten Arbeitsstellung und einer sogenannten Wartungsstellung, in welcher der Lenker in Richtung des vorderen Abschnitts des Fahrgestells umgeklappt ist, angebracht ist,
**dadurch gekennzeichnet, dass** der vordere Abschnitt des Fahrgestells einen Riegel (50) zum Verriegeln des Lenkers in der Wartungsstellung umfasst.

2. Rasenmäher nach Anspruch 1, wobei das Fahrgestell (10) ein Fahrgestell aus rohrförmigen Elementen ist.

3. Rasenmäher nach einem der vorhergehenden Ansprüche, wobei das Fahrgestell (10) rohrförmige Fahrgestellelemente mit länglichem Querschnitt umfasst.

4. Rasenmäher nach einem der Ansprüche 2 oder 3, wobei die rohrförmigen Fahrgestellelemente nahtlos zusammengebaut sind und mit dem Fahrgestell verbundene Elemente umfassen, die an dem Fahrgestell nahtlos befestigt sind.

5. Rasenmäher nach einem der vorhergehenden Ansprüche, wobei sich die Gelenkachse (G) in einer Bezugsebene (V) befindet, die im Wesentlichen senkrecht zu einer Ebene (P) des Fahrgestells ist, wobei sich die Bezugsebene (V) zwischen einer ersten Ebene (V1), die zu der Bezugsebene (V) parallel ist und die Drehachse (R) der Hinterräder (14) umfasst, und einer zweiten Ebene (V2), die zu der Bezugsebene (V) parallel ist und durch ein hinteres Ende außerhalb des Rasenmähers verläuft.

6. Rasenmäher nach einem der vorhergehenden Ansprüche, umfassend mindestens ein Scharnier (34a, 34b) entlang der Schwenkachse des Lenkers, das den Lenker (40) mit der hinteren Verlängerung (30) des Fahrgestells verbindet, wobei das Scharnier mit einem Riegel (36a, 36b) zum Verriegeln des Lenkers in der oberen Arbeitsstellung versehen ist.

7. Rasenmäher nach einem der vorhergehenden Ansprüche, umfassend mindestens ein Stützelement (34a, 34b, 42a, 42b), das in den Lenker oder die hintere Verlängerung integriert ist, wobei das Stützelement dazu ausgelegt ist, mit dem Boden in Kontakt zu kommen, wenn der Rasenmäher über seine Hinterräder nach hinten geschwenkt oder umgedreht wird.

8. Rasenmäher nach einem der vorhergehenden Ansprüche, wobei die steife hintere Verlängerung (30) und das Ende (44) des Lenkers in der Wartungsstellung eine mittlere Höhe aufweisen, die, gemessen in Bezug auf das Fahrgestell, größer als eine Höhe der Schneideinheit ist, sodass der Lenker über einem obersten Abschnitt (27) der Schneideinheit in der Wartungsstellung gehalten wird.

9. Rasenmäher nach einem der vorhergehenden Ansprüche, wobei der Lenker (40) zwei Arme (42a, 42b) aufweist, die an die steife hintere Verlängerung (30) angelenkt sind und miteinander über einen Zwischensteg (44, 47) verbunden sind.

10. Rasenmäher nach einem der vorhergehenden Ansprüche, wobei die motorisierte Schneideinheit einen Motor (26), ein höhenverstellbares Schneidgehäuse (22) und mindestens ein Schneidmesser (24), das von dem Motor in Drehung versetzt wird, umfasst.

11. Rasenmäher nach Anspruch 9, wobei der Motor (26) ein Elektromotor ist, wobei der Rasenmäher ferner mindestens einen Akkumulator (28) zum Versorgen des Motors mit Elektrizität umfasst.

12. Handgeführter Rasenmäher nach einem der vorhergehenden Ansprüche, wobei jedes Hinterrad (14) mit einem elektrischen Antriebsmotor (15) versehen ist.

## Claims

1. A wheeled mower comprising:
- a chassis (10) having a rear part provided with rear wheels (14) with a fixed axis of rotation (R) and a front part provided with at least one pivoting wheel (16),
- a motorised cutting unit (22, 24, 26, 28) fixed with respect to the chassis, and
- a handlebar (40), the handlebar being mounted on at least one rigid rear extension (30) of the rear part of the chassis with a pivot along a pivot axis (G) parallel to the axis of rotation (R) of the rear wheels, between at least a position referred to as the working position and a position referred to as the maintenance position in which the handlebar is folded down in the direction of the front part of the chassis, **characterised in that** the front part of the chassis comprises a latch (50) for locking the handlebar in said maintenance position.

2. A mower according to claim 1 wherein the chassis (10) is a chassis comprising tubular elements.

3. A mower according to one of the preceding claims wherein the chassis (10) comprises tubular chassis elements of an oblong section.

4. A mower according to one of claims 2 and 3 wherein the tubular chassis elements are assembled without welding and comprising elements attached to the chassis, fixed to the chassis without welding.

5. A mower according to one of the preceding claims wherein the pivot axis (G) is disposed in a reference plane (V) substantially perpendicular to a plane (P) of the chassis, the reference plane (V) being disposed between a first plane (V1) parallel to the reference plane (V) and comprising the axis of rotation (R) of the rear wheels (14), and a second plane (V2) parallel to the reference plane (V) and passing through an overall rear end of the mower.

6. A mower according to one of the preceding claims comprising at least one hinge (34a, 34b) along the pivot axis of the handlebar, connecting the handlebar (40) to the rear extension (30) of the chassis, the hinge being provided with a latch (36a, 36b) for locking the handlebar in the high working position.

7. A mower according to one of the preceding claims comprising at least one support member (34a, 34b, 42a, 42b) which is fixed with respect to the handlebar or the rear extension, the support member being capable of coming into contact with the ground when the mower is pivoted rearwardly about its rear wheels or overturned.

8. A mower according to one of the preceding claims wherein the rigid rear extension (30) and the end (44) of the handlebar In the maintenance position involve an average height greater than a height of the cutting unit, measured with respect to the chassis, such that the handlebar is held above a highest part (27) of the cutting unit in the maintenance position.

9. A mower according to one of the preceding claims wherein the handlebar (40) has two arms (42a, 42b) pivotably mounted on the rigid rear extension (30) and connected together by a spacer section (44, 47).

10. A mower according to any one of the preceding claims wherein the motorised cutting unit comprises a motor (26), a cutting casing (22) which is adjustable in height and at least one cutting blade (24) driven in rotation by the motor.

11. A mower according to claim 9 wherein the motor (26) is an electric motor, the mower further comprising at least one assembly of accumulators (28) for the electric power supply for the motor.

12. A self-propelled mower according to any one of the preceding claims wherein each rear wheel (14) is provided with an electric drive motor (15).
